# EUROPEAN PATENT SPECIFICATION

(11) **EP 0 695 618 B1**
(45) Date of publication and mention of the grant of the patent: **27.01.1999**
(21) Application number: 95112154.0
(22) Date of filing: 02.08.1995
(51) Int. Cl.: B29C 45/27

(54) **Injection molding nozzle with collar having locating and retaining lug portions**
Sprizgiessdüse mit Kragen der Positionierungs- und Haltenockenteile aufweist
Buse de moulage par injection avec collier ayant des parties d'ergot de positionnement et de maintien

(30) Priority: 03.08.1994 CA 2129412
(43) Date of publication of application: 07.02.1996
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- EP-A- 0 283 001
- EP-A- 0 303 814
- US-A- 5 429 491

## Description

### BACKGROUND OF THE INVENTION

This invention relates generally to injection molding and more particularly to an injection molding nozzle with an outer collar having two segments with locating and retaining lug portions.

Heated injection molding nozzles for conveying thermoplastic materials to a cavity in a cooled mold are well known. More recently, as seen in the applicant's Canadian Patent Application Serial Number 2,127,210 filed June 30, 1994 entitled "Injection Molding Nozzle with Helical Cooling Conduit", the nozzle is cooled to convey thermosetting material to a cavity in a heated mold. In the past, as seen in the applicant's U.S. Patent Number 4,403,405 which issued September 13, 1983, these nozzles have been made with a single piece outer collar integrally brazed around an elongated central portion. More recently, the applicant's Canadian Patent Application Serial Number 2,127,211 filed June 30, 1994 (US-A-5 429 491) entitled "Injection Molding Nozzle with Removable Collar Portion" shows a nozzle with a removable outer collar having two segments which are retained in an interlocking position around a central body by a retaining ring. While this is a significant improvement which is satisfactory for many applications, it has the disadvantage that the nozzle is not adequately located and secured in place for some applications.

EP-A-0 283 001 shows an injection molding nozzle provided with a head plate at one end thereof.

### SUMMARY OF THE INVENTION

Accordingly, it is an object of the present invention to at least partially overcome the disadvantages of the prior art by providing an injection molding nozzle with an outer collar having two self-retaining segments which also securely locate the nozzle in place.

To this end, in one of its aspects, the invention provides an injection molding nozzle to be seated in an opening in a mold with an insulative air space extending between the nozzle and the mold, the opening in the mold having a rear portion with a generally cylindrical surface, the nozzle having a rear end, a front end, and a melt channel extending therethrough from the rear end to convey melt forwardly toward at least one gate extending through the mold to a cavity, the nozzle having an elongated central body and a two-segment outer collar, the outer collar extending around the central body adjacent the rear end of the nozzle and comprising two separate segments which are received around the elongated central body in a position interlocking with the elongated central body to prevent longitudinal movement of the elongated central body relative to the outer collar, the nozzle being characterized in that the two segments of the outer collar of the nozzle have a plurality of locating and retaining lug portions spaced therearound, each locating and retaining lug portion to extend adjacent the rear end of the nozzle outwardly across the insulative air space into locating contact against the surrounding generally cylindrical surface of the rear portion of the opening in the mold to retain the two segments of the outer collar in the interlocking position around the central body of the nozzle.

Further objects and advantages of the invention will appear from the following description taken together with the accompanying drawings.

### BRIEF DESCRIPTION OF THE DRAWINGS

Figure 1 is a sectional view of a portion of a multi-cavity injection molding system showing a nozzle according to a preferred embodiment of the invention,
Figure 2 is an exploded isometric view of the nozzle seen in Figure 1 showing how it is made,
Figure 3 is an isometric view of the nozzle assembled in the interlocking position, and
Figure 4 is a plan view of the assembled nozzle seated in the mold.

### DETAILED DESCRIPTION OF THE INVENTION

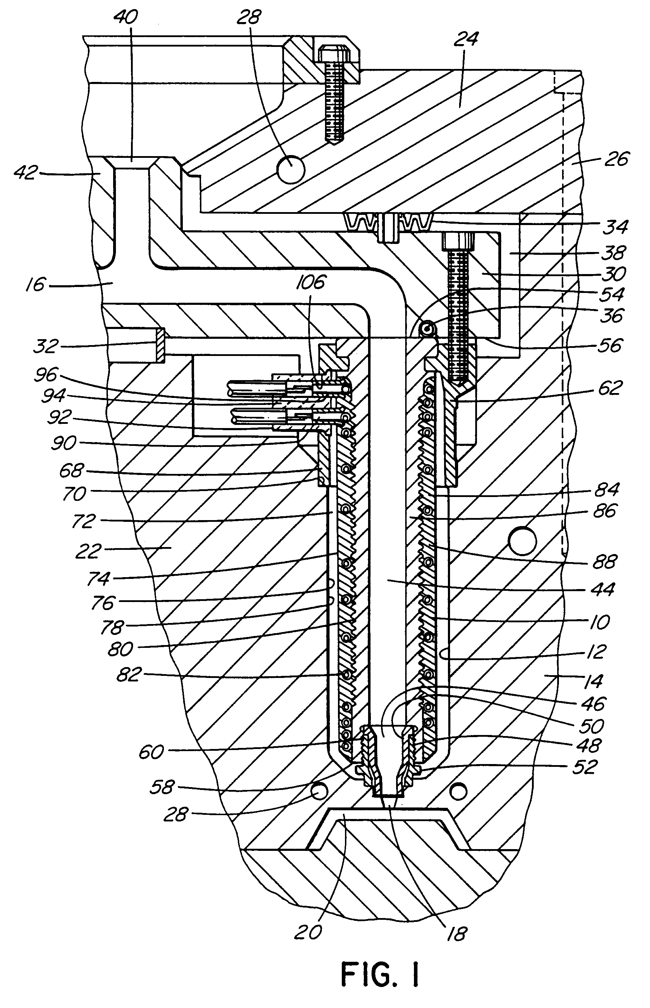

Reference is first made to Figure 1 which shows a portion of a multi-cavity injection molding system or apparatus in which several steel nozzles 10 are seated in openings 12 in a mold 14 to convey pressurized plastic melt through a melt passage 16 to respective gates 18 leading to different cavities 20 in the mold 14. While the mold 14 usually has a greater number of plates depending upon the configuration, in this case only a cavity plate 22 and back plate 24 which are secured together by bolts 26 are shown for ease of illustration. The mold 14 is cooled by pumping cooling water through cooling conduits 28 in the cavity plate 22 and back plate 24.

The nozzles 10 are interconnected by a steel melt distribution manifold 30 which is mounted between the cavity plate 22 and the back plate 24 by a central locating ring 32 and insulative and resilient spacer members 34. The melt distribution manifold 30 is heated by an integral electrical heating element 36 and an insulative air space 38 is provided between it and the surrounding cooled cavity plate 22 and back plate 24. The melt passage 16 receives melt through a central inlet 40 in cylindrical inlet portion 42 of the manifold 30 and branches out in the manifold 30 to pass through a central melt channel 44 in each of the nozzles 10. The melt then flows through an aligned melt duct 46 in a nozzle seal 48 having a hollow inner piece 50 and a threaded outer piece 52 to the gate 18.

Each nozzle 10 has a rear end 54 which abuts against the front face 56 of the manifold 30 and a front end 58 with a threaded seat 60 in which the two-piece nozzle seal 48 is seated. Next to the rear end 54, the nozzle 10 has an outer collar 62 with two separate steel segments or semicircular halves 64 extending around an elongated central body 66 through which the central melt channel 44 extends. The nozzle 10 is seated in the opening 12 in the mold 14 by a forwardly extending flange portion 68 of the outer collar 62 sitting on a circular seat 70 in the opening 12 to provide an insulative air space 72 between the outer surface 74 of the nozzle 10 and the surrounding inner surface 76 of the forward portion 78 of the opening 12 in the mold 14. In this embodiment, the central body 66 of the nozzle is made with an electrical heating element 80 having a helical portion 82 cast into a copper alloy conductive portion 84 around a hot-work steel hollow core 86. The hollow core 86 has a threaded outer surface 88 to ensure the copper alloy conductive portion 84 can be securely cast around it. The helical portion 82 of the heating element 80 is generally wound with its coils closer together near the rear and front ends 54, 58 of the nozzle 10 where there is more heat loss. The electrical heating element 80 has lead portions 90 which extend outwardly to an external terminal 92 formed by a ceramic insulative connector 94. Each of the lead portions 90 extends through a stainless steel protective tube 96 which has its inner end 98 rigidly cast in the copper alloy conductive portion 84 around the hollow core 86.

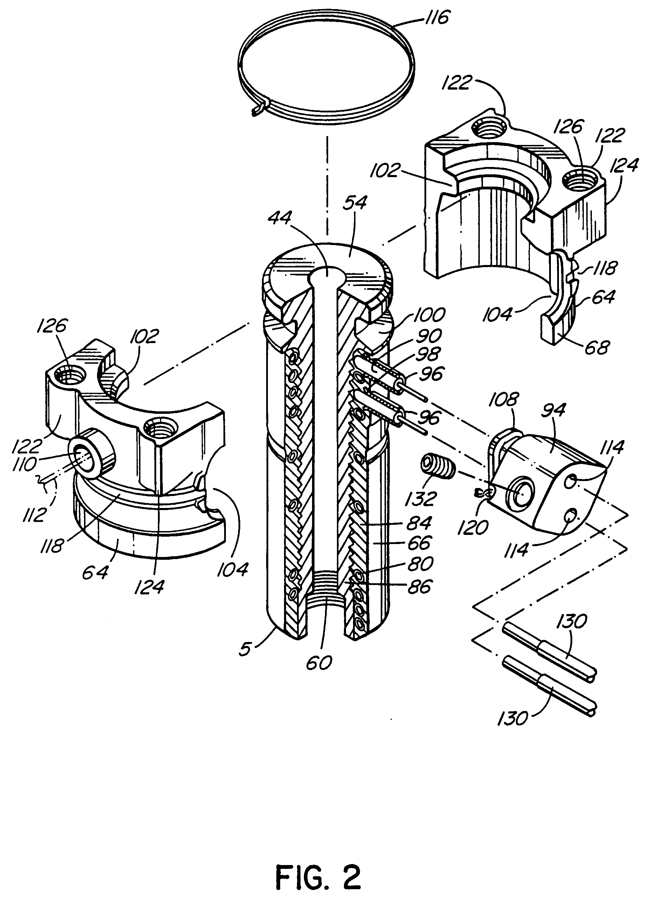

As is best seen in Figure 2, a circular channel 100 with a rectangular cross-section extends around the elongated central body 66 of the nozzle 10 near its rear end 54. The two semicircular segments 64 of the outer collar 62 each have a matching flange 102 which fit into the circular channel 100 in the central body 66 in an interlocking position preventing longitudinal movement of the central body 66 relative to the outer collar 62. The semicircular segments 64 each have a matching notch 104 in one end which combine to form a radial opening 106 when the semicircular segments 64 are mounted in this interlocking position around the central body 66. The radial opening 106 is undercut to retainably receive a matching tapered inner end portion 108 of the insulative connector 94. The two matching semicircular segments 64 are generally the same size and shape, and both of them are shown having a radial thermocouple hole 110 to receive a thermocouple element 112 to monitor the operating temperature.

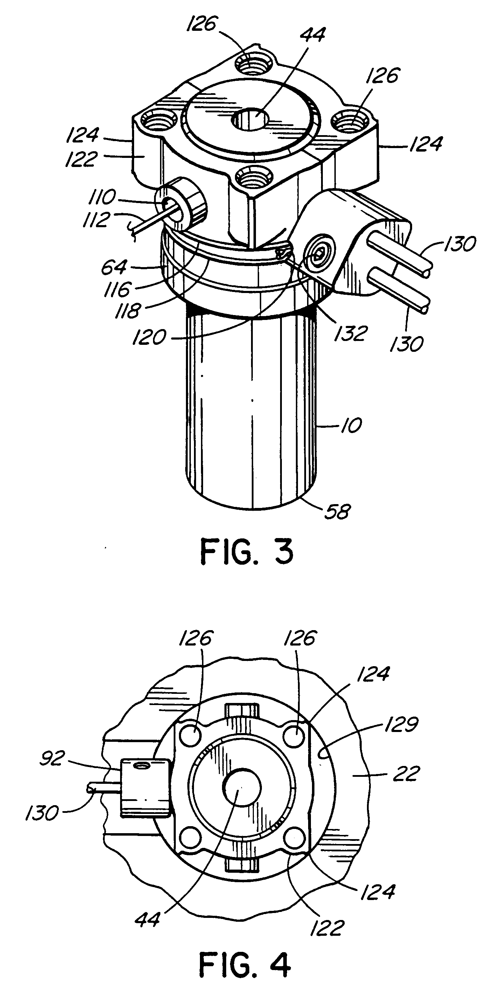

While the central body 66 is shown having a predetermined length and a threaded seat 60 in the front end 58 to receive the two-piece nozzle seal 48, in other embodiments it can have a different length or a different configuration for different types of gating. After selecting an appropriate central body 66, a standard ceramic insulative connector 94 is mounted on it with the protective tubes 96 received in a pair of holes 114 in the insulative connector 94. The two semicircular segments 64 of the outer collar 62 are then mounted in the interlocking position around the central body 66 with the inwardly projecting flanges 102 received in the circular channel 100 and the inner end portion 108 of the ceramic insulative connector 94 securely received in the radial opening 106. A retaining wire 116 is then wound in a circular groove 118 extending around the two semicircular segments 64 and through a transverse hole 120 through the insulative connector 94 to secure them together as seen in Figure 3 during shipping and installation.

In this embodiment, each of the semicircular segments 64 has a pair of locating and retaining lug portions 122 spaced therearound. Each lug portion 122 extends outwardly to an outer longitudinal ridge 124 and provide sufficient thickness for a threaded hole 126 also extending longitudinally partially in each lug portion 122. As seen in Figure 1, during installation in the mold 14 screws 128 are tightened into the holes 126 from the manifold 30 to secure the rear end 54 of the nozzle 10 against the front face 56 of the manifold 30 to prevent melt seeping between them, particularly during start-up. When the nozzle 10 is installed in the opening 12 in the mold 14, as seen in Figure 4, the outer ridges 124 of the locating and retaining lug portions 122 fit in contact against the inner surface 129 of the opening 12. This precisely locates the rear end 54 of the nozzle 10 and prevents it tilting slightly on the circular seat 70 due to thermal expansion of the melt distribution manifold 30 and also securely retains the semicircular segments 64 in the interlocking position. Electrical power wires 130 from an electrical power source are connected to the lead portions 90 of the electrical heating element 80 by set screws 132 which are screwed into the ceramic insulative connector 94.

In use, after assembly and installation in a mold 14, as shown in Figure 1, electrical power is applied to the heating element 36 in the manifold 30 and to the heating elements 80 in the nozzles 10 to heat them to a predetermined operating temperature. Pressurized melt is applied from a molding machine (not shown) to the central inlet 40 of the melt passage 16 according to a predetermined cycle. The melt flows through the melt distribution manifold 30, nozzles 10, nozzle seals 48, and gates 18 into the cavities 20. After the cavities 20 are filled and a suitable packing and cooling period has expired, the injection pressure is released and the melt conveying system is decompressed to avoid stringing through the open gates 18. The mold 14 is then opened to eject the molded products. After ejection, the mold 14 is closed and the cycle is repeated continuously with a cycle time dependent upon the size of the cavities 20 and the type of material being molded.

While the description of the nozzle 10 with the outer collar 62 having two segments 64 with locating and retaining lug portions 122 according to the invention has been given with respect to a preferred embodiment, it will be evident that various other modifications are possible without departing from the scope of the invention as understood by those skilled in the art and as defined in the following claims. For instance, rather than being heated and seated in a cooled mold 14, the nozzles 10 can be cooled and seated in a heated mold for molding thermosetting materials.

## Claims

1. An injection molding nozzle to be seated in an opening in a mold with an insulative air space (72) extending between the nozzle (10) and the mold (14), the opening in the mold having a rear portion with a generally cylindrical surface, the nozzle having a rear end (54), a front end (58), and a melt channel (44) extending therethrough from the rear end (54) to convey melt forwardly toward at least one gate (18) extending through the mold (14) to a cavity (20), the nozzle having an elongated central body (66) and a two-segment outer collar (62, 64), the outer collar (62) extending around the central body adjacent the rear end (54) of the nozzle (14) and comprising two separate segments (64) which are received around the elongated central body (66) in a position interlocking with the elongated central body to prevent longitudinal movement of the elongated central body (66) relative to the outer collar (62), the nozzle being characterized in that
the two segments (64) of the outer collar (62) of the nozzle (10) have a plurality of locating and retaining lug portions (122) spaced therearound, each locating and retaining lug portion to extend adjacent the rear end (54) of the nozzle outwardly across the insulative air space (72) into locating contact against the surrounding generally cylindrical surface (129) of the rear portion of the opening (12) in the mold, whereby the two segments (64) of the outer collar (62) fit in the opening in the mold and are retained in the interlocking position around the central body of the nozzle.

2. An injection molding nozzle as claimed in claim 1 wherein each locating and retaining lug portion (122) forms an outer longitudinal ridge (124) to extend into contact against the generally cylindrical surface (129) of the rear portion of the opening (12) in the mold.

3. An injection molding nozzle as claimed in claim 2 to be seated in the opening (12) in the mold (14) with the rear end (54) of the nozzle (10) abutting against the front face (56) of a melt distribution manifold (30), wherein the two segments (64) of the outer collar (62) of the nozzle have a plurality of threaded holes (126) extending longitudinally thereinto from the rear end of the nozzle, each threaded hole (126) extending at least partially in a respective one of the retaining and locating lug portions (122), the threaded holes (126) to receive screws extending forwardly from the melt distribution manifold to secure the rear end (54) of the nozzle (10) tightly against the front face of the melt distribution manifold.

4. An injection molding nozzle as claimed in claim 3 wherein each segment of the outer collar (62) of the nozzle has at least two of said threaded holes (126) extending thereinto.

5. An injection molding nozzle as claimed in claim 3 wherein one of the elongated central body (66) and the outer collar (62) has a circular channel (100) extending therearound and the other of the elongated central body (66) and the outer collar (62) has a circular flange (102) extending therearound which is seated in the circular channel in the interlocking position.

6. An injection molding nozzle as claimed in claim 5 wherein the nozzle is heated by an electrical heating element (80) having a helical portion extending around the melt channel (44) in the elongated central body (66).

## Patentansprüche

1. Eine Spritzgießdüse (10), die in einer Öffnung in einer Gießform sitzt, mit einem isolierenden Luftzwischenraum (72), der sich zwischen der Düse (10) und der Gießform (14) erstreckt, die Öffnung in der Gießform weist einen hinteren Abschnitt mit einer im wesentlichen zylindrischen Oberfläche auf, die Düse hat ein hinteres Ende (54), ein vorderes Ende (58), und einen Schmelzekanal (44), der sich von dem hinteren Ende (54) durch die Düse erstreckt, um Schmelze nach vorn zu wenigstens einem durch die Gießform (14) in einem Hohlraum (20) sich erstreckenden Anguß (18) zu befördern, die Düse weist einen langgestreckten Mittelkörper (66) und einen zweiteiligen äußeren Kranz (62, 64) auf, der äußere Kranz (62) erstreckt sich in der Nähe des hinteren Endes (54) der Düse um den Mittelkörper und weist zwei getrennte Segmente (64) auf, die um den langgestreckten Mittelkörper (66) in einer Arretierungsposition mit dem langgestreckten Mittelkörper aufgenommen sind, um eine longitudinale Bewegung des langgestreckten Mittelkörpers relativ zum äußeren Kranz (62) zu verhindern, die Düse ist **dadurch gekennzeichnet,** daß
die zwei Segmente (64) des äußeren Kranzes (62) der Düse (10) mehrere Anordnungs- und Halteansatzabschnitte (122) aufweisen, die in Umfangsrichtung voneinander beabstandet sind, jeder Anordnungs- und Halteansatzabschnitt sich in der Nähe des hinteren Endes (54) der Düse nach außen durch den isolierenden Luftzwischenraum (72) in der Weise erstreckt, daß er mit der im wesentlichen zylindrischen Oberfläche (129) des hinteren Abschnitts der Öffnung (12) in der Gießform in Anordnungskontakt ist, wobei die zwei Segmente (64) des äußeren Kranzes (62) in die Öffnung in der Gießform eingepaßt sind und in der Arretierungsposition um den Mittelkörper der Düse festgehalten werden.

2. Eine Spritzgießdüse nach Anspruch 1, wobei jeder Anordnungs- und Halteansatzabschnitt (122) eine äußere longitudinale Kante (124) bildet, die sich zu einem Kontakt gegen die im wesentlichen zylindrische Oberfläche (129) des hinteren Abschnitts der Öffnung (12) in der Gießform erstreckt.

3. Eine Spritzgießdüse nach Anspruch 2, die in der Öffnung (12) in der Gießform (14) sitzt, mit dem hinteren Ende (54), das an der Vorderfläche (56) eines Schmelzeverteilers (30) anstößt, wobei die zwei Segmente (64) des äußeren Kranzes (62) der Düse mehrere Gewindebohrungen (126) aufweisen, die sich vom hinteren Ende der Düse aus und in Längsrichtung durch diese erstrecken, jede Gewindebohrung (126) sich zumindest teilweise in einen entsprechenden der Anordnungs- und Halteansatzabschnitte (122) erstreckt und die Gewindebohrungen (126) zur Aufnahme von Schrauben (128) sich vom Schmelzeverteiler (30) nach vorn erstrecken, um das hintere Ende (54) der Düse (10) dicht an der vorderen Fläche des Schmelzeverteilers zu befestigen.

4. Eine Spritzgießdüse nach Anspruch 3, wobei jedes der Segmente des äußeren Kranzes (62) der Düse zumindest zwei dieser Gewindebohrungen (126) aufweist, die sich durch diese erstrecken.

5. Eine Spritzgießdüse nach Anspruch 3, wobei einer von dem langgestreckten Mittelkörper (66) und dem äußeren Kranz (62), einen kreisförmigen Kanal (100) aufweist, der sich um diesen erstreckt, und der andere von dem langgestreckten Mittelkörper (66) und dem äußeren Kranz (62) einen kreisförmigen Flansch (102) aufweist, der sich um diesen erstreckt und in der Arretierungsposition im kreisförmigen Kanal sitzt.

6. Eine Spritzgießdüse nach Anspruch 5, wobei die Düse durch ein elektrisches Heizelement (80) geheizt wird, das einen um den Schmelzekanal (44) im langgestreckten Mittelkörper (66) verlaufenden schraubenlinienförmigen Abschnitt aufweist.

## Revendications

1. Une buse de moulage par injection devant être montée dans une ouverture ménagée dans un moule avec un espace d'air d'isolation (72) s'étendant entre la buse (10) et le moule (14); l'ouverture ménagée dans le moule ayant une partie arrière ayant une surface globalement cylindrique, la buse ayant une extrémité arrière (54), une extrémité avant (58), et un canal à produit en fusion (44) s'étendant à travers elle depuis l'extrémité arrière (54) pour véhiculer le produit en fusion vers l'avant en direction d'au moins un orifice (18) s'étendant à travers le moule (14) pour arriver dans une cavité (20); la buse ayant un corps central (66) allongé et un collier extérieur (62, 64) réalisé en deux segments, le collier extérieur (62) s'étendant autour du corps central en une position adjacente à l'extrémité arrière (54) de la buse (14) et comprenant deux segments séparés (64) qui sont logés autour du corps central allongé (66), dans une position assurant un verrouillage avec le corps central allongé, pour empêcher tout déplacement longitudinal du corps central allongé (66) par rapport au collier extérieur (62), la buse étant caractérisée en ce que les deux segments (64) du collier extérieur (62) de la buse (10) ont une pluralité de parties formant pattes de positionnement et de retenue (122) espacées autour d'eux, chaque partie formant patte de positionnement et de retenue s'étendant en position adjacente à l'extrémité arrière (54) de la buse vers l'extérieur à travers l'espace d'air d'isolation (72), en contact de positionnement contre la surface environnante (129), globalement cylindrique, de la partie arrière de l'ouverture (12) dans le moule, de manière que les deux segments (64) du collier extérieur (62) se montent dans l'ouverture ménagée dans le moule et soient retenus dans la position de verrouillage, autour du corps central de la buse.

2. Une buse pour moulage par injection selon la revendication 1, dans laquelle chaque partie formant patte de positionnement et de retenue (122) forme une nervure longitudinale extérieure (124) s'étendant en contact contre la surface globalement cylindrique (129) de la partie arrière de l'ouverture (12) ménagée dans le moule.

3. Une buse de moulage par injection selon la revendication 2 devant être montée dans l'ouverture (12) ménagée dans le moule (14), l'extrémité arrière (54) de la buse (10) venant en butée contre la face avant (56) d'un distributeur de produit fondu (30); dans lequel les deux segments (64) du collier extérieur (62) de la buse comportent une pluralité de trous taraudés (126) s'étendant intérieurement longitudinalement depuis l'extrémité arrière de la buse, chaque trou taraudé (126) s'étendant au moins partiellement dans l'une respective des parties formant pattes de retenue et de positionnement (122); les trous taraudés (126) permettant de loger des vis s'étendant vers l'avant depuis le distributeur de produit fondu, afin d'assurer l'extrémité arrière (54) de la buse (10) de façon étanche contre la face avant du distributeur de produit fondu.

4. Une buse de moulage par injection selon la revendication 3, dans laquelle chaque segment du collier extérieur (62) de la buse comporte au moins deux desdits trous taraudés (126) , s'y étendant intérieurement.

5. Une buse de moulage par injection selon la revendication 3, dans laquelle l'un parmi le corps central allongé (66) et le collier extérieur (62) a un canal circulaire (100) s'étendant autour de lui et l'autre parmi le corps central allongé (66) et le collier extérieur (62) comporte une bride circulaire (102) s'étendant autour de lui, montée dans le canal circulaire, dans la position de verrouillage.

6. Une buse de moulage par injection selon la revendication 5, dans laquelle la buse est chauffée par un élément de chauffage électrique (80) ayant une partie hélicoïdale s'étendant autour du canal à produit fondu (44), dans le corps central allongé (66).
